# EUROPÄISCHE PATENTSCHRIFT

(11) **EP 4 328 468 B1**
(45) Veröffentlichungstag und Bekanntmachung des Hinweises auf die Patenterteilung: **01.10.2025**
(21) Anmeldenummer: 23217120.7
(22) Anmeldetag: 15.12.2023
(51) Int. Cl.: F16K 1/04, F04D 19/04, F16K 51/02, F04D 27/02, F16K 24/06

(54) **FLUTVENTIL SOWIE MIT SOLCH EINEM FLUTVENTIL AUSGERÜSTETE VAKUUMPUMPE**
FLOW VALVE AND VACUUM PUMP EQUIPPED WITH SUCH A FLOW VALVE
SOUPAPE ET POMPE À VIDE ÉQUIPÉE D'UNE TELLE SOUPAPE

(43) Veröffentlichungstag der Anmeldung: 28.02.2024
(73) Patentinhaber: Pfeiffer Vacuum Technology AG, 35614 Asslar (DE)
(72) Erfinder: VOR, Maximilian, 35745 Herborn (DE)
(74) Vertreter: Manitz Finsterwald Patent- und Rechtsanwaltspartnerschaft mbB

(56) Entgegenhaltungen:
- EP-A1- 3 832 141
- US-A- 3 948 481
- US-A- 4 025 048
- US-A- 4 745 894
- US-A- 4 893 651
- US-A- 5 368 181
- US-A- 6 062 540

## Beschreibung

Die vorliegende Erfindung betrifft ein Flutventil, mittels dessen sich eine in einem Gehäuse einer Vakuumpumpe, insbesondere einer Turbomolekularvakuumpumpe, ausgebildete Flutöffnung selektiv öffnen und schließen lässt. Außerdem betrifft die Erfindung eine Vakuumpumpe, welche mit solch einem Flutventil ausgerüstet ist.

Ein gattungsgemäßes Flutventil geht der Art nach im Wesentlichen aus der US 6 062 540 A hervor. Der Art nach im Wesentlichen vergleichbare Flutventile werden in den Druckschriften US 3 948 481 A und US 4 025 048 A beschrieben. Weitergehender Stand der Technik ergibt sich ferner aus der EP 3 832 141 A1.

Vakuumpumpen wie beispielsweise Turbomolekularvakuumpumpen weisen häufig eine Flutöffnung auf, durch die die Pumpe bzw. eine im Pumpengehäuse befindliche Pumpstufe mit Luft aus der Atmosphäre geflutet werden kann. Hierdurch kann beispielsweise die Drehzahl des Rotors der Pumpstufe gezielt beeinflusst werden.

Bei derzeit im Einsatz befindlichen Vakuumpumpen wird die Flutöffnung in aller Regel durch eine einfache Flutschraube verschlossen, welche über einen Drehantrieb in Form eines Schraubenkopfs von Hand gelöst werden kann, um so die Flutöffnung freizugeben. Hierbei besteht jedoch die Gefahr, dass die Flutschraube vollständig aus der Flutöffnung herausgeschraubt wird und dabei unter Umständen in die Anlage des Pumpenbetreibers fällt. Im ungünstigsten Falle ist die Flutschraube dann nicht mehr auffindbar ist, so dass die Anlage stillsteht, bis eine neue Flutschraube verfügbar ist.

Ein weiteres Problem besteht darin, dass die Flutschraube beim Wiedereinschrauben in die Flutöffnung verkanten kann, was unter Umständen zu einer Beschädigung des Gewindes der Flutöffnung führen kann.

Der Erfindung liegt daher die Aufgabe zugrunde, ein Flutventil für eine Vakuumpumpe anzugeben, insbesondere für eine Turbomolekularvakuumpumpe, welches den zuvor beschriebenen Problematiken Rechnung trägt.

Diese Aufgabe wird mit einem Flutventil zum Öffnen und Schließen einer Flutöffnung einer Vakuumpumpe, insbesondere einer Turbomolekularvakuumpumpe, gelöst, wobei sich das Flutventil durch die Merkmale des Anspruchs 1 auszeichnet.

Anders als eine herkömmliche Flutschraube setzt sich das Flutventil im Wesentlichen aus zwei Komponenten zusammen, nämlich einem Ventilgehäuse und einem Ventilelement. Das Ventilelement wird dabei von dem Ventilgehäuse verliersicher aufgenommen, wohingegen das Ventilgehäuse seinerseits zur Aufnahme in einer Flutöffnung einer Vakuumpumpe ausgebildet ist. Konkret ist dabei das Ventilgehäuse von einer Durchgangsbohrung durchsetzt, welche zwei voneinander abgewandte Stirnflächen des Ventilgehäuses - eine erste axiale Stirnfläche und eine von der ersten axialen Stirnfläche abgewandte zweite axiale Stirnfläche - miteinander verbindet. Bei dem Ventilelement handelt es sich um einen Schraubenschaft mit einem Außengewinde, über das Ventilelement in ein in der Durchgangsbohrung des Ventilgehäuses ausgebildeten Innengewinde eingeschraubt ist.

Durch Drehung des Ventilelements lässt sich somit die Axialstellung des Ventilelements in Bezug auf das Ventilgehäuse verändern.

Wie eine herkömmliche Flutschraube weist auch der Schraubenschaft an einem ersten Ende einen Drehantrieb beispielsweise in Form eines Schraubenkopfs auf, über den das Ventilelement von Hand gedreht werden kann, um so die Axialstellung des Ventilelements gegenüber dem Ventilgehäuse verändern zu können. An seinem anderen Ende weist der Schraubenschaft hingegen einen einstückig mit dem Schraubenschaft ausgebildeten Ventilteller auf, welcher in einer ersten Axialstellung des Ventilelements an der zweiten axialen Stirnfläche des Gehäuses zumindest mittelbar anliegt, um so die Durchgangsbohrung dicht zu verschließen. In einer zweiten Axialstellung des Ventilelements weist hingegen der Ventilteller gegenüber der zweiten Stirnfläche einen Abstand auf. In der zweiten Axialstellung ist somit die Durchgangsbohrung durch den Ventilteller nicht verschlossen, so dass bereits aufgrund des Spiels zwischen dem Innengewinde der Durchgangsbohrung und dem Außengewinde des Schraubenschafts Luft aus der Atmosphäre durch das Flutventil ins Innere der Pumpe strömen kann.

Dadurch, dass sich der Ventilteller an dem dem Drehantrieb des Schraubenschafts gegenüberliegenden Ende desselben und somit im in einer Flutöffnung einer Vakuumpumpe eingebauten Zustand innerhalb derselben befindet, kann das Ventilelement nicht versehentlich aus dem Ventilgehäuse herausgeschraubt und somit in die Anlage des Pumpenbetreibers fallen. Wird vielmehr das Ventilelement "herausgeschraubt", so gelangt hierbei der Ventilteller in der ersten Axialstellung des Ventilelements mit der zweiten axialen Stirnfläche des Ventilgehäuses in Anlage, was ein weiteres Herausschrauben des Ventilelements aus dem Ventilgehäuse verhindert.

Im Folgenden wird nun auf bevorzugte Ausführungsformen der Erfindung eingegangen. Weitere Ausführungsformen können sich auch aus den abhängigen Ansprüchen, der Figurenbeschreibung sowie den Zeichnungen selbst ergeben.

Zwar ist es bereits aufgrund des zuvor erwähnten Gewindespiels in der zweiten Axialstellung des Ventilelements möglich, dass Luft aus der Atmosphäre durch die Durchgangsbohrung des Ventilgehäuses ins Innere einer Vakuumpumpe strömen kann, in dessen Flutöffnung das Flutventil eingesetzt ist; da rein aufgrund des Gewindespiels die mögliche Luftströmung zur Flutung einer Vakuumpumpe jedoch begrenzt ist, ist es vorgesehen, dass in dem Schraubenschaft ein im Wesentlichen axial bzw. in Längsrichtung des Schraubenschafts ausgerichteter Axialkanal ausgebildet ist, der nur in der zweiten Axialstellung eine Fluidverbindung durch den Schraubenschaft zur Flutung einer Vakuumpumpe ermöglicht, wohingegen der in Rede stehende Axialkanal in der ersten Axialstellung des Ventilelements eine Luftströmung ins Innere einer Vakuumpumpe unterbindet.

Bei dem Axialkanal kann es sich beispielsweise um eine axial verlaufende Nut handeln, welche im Außenumfang entlang des Schraubenschafts zwischen dessen ersten Ende und dem Ventilteller verläuft. Die in Rede stehende Nut kreuzt also gewissermaßen die Gewindegänge des Außengewindes des Schraubenschafts. Befindet sich das Ventilelement in seiner ersten Axialstellung, in der der Ventilteller zumindest mittelbar an der zweiten axialen Stirnfläche des Ventilgehäuses anliegt, so ist aufgrund der Tatsache, dass der Ventilteller bereits die Durchgangsbohrung abdichtet, keine Fluidströmung durch den Axialkanal in Form der längs verlaufenden oberflächlichen Nut möglich. In der zweiten Axialstellung des Ventilelements kann hingegen Luft aus der Umgebung durch den Axialkanal ins Innere der Pumpe zur Flutung derselben strömen, ohne dass dabei der Strömungsquerschnitt durch die Gewindegänge begrenzt wird.

Bei dem Axialkanal kann es sich jedoch auch um eine im Inneren des Schraubenschafts ausgebildete Bohrung handeln, welche sich vom ersten Ende des Schraubenschafts in Richtung des zweiten Endes des Schraubenschafts erstreckt und dort angrenzend an den Ventilteller aus dem Schraubenschaft austritt. Bei dieser Ausführungsform verläuft der Axialkanal also leicht schräg zur Längsachse des Schraubenschafts, damit er am zweiten Ende des Schraubenschafts seitlich aus diesem austreten kann.

Erfindungsgemäß ist es vorgesehen, dass der Axialkanal als eine Sacklochbohrung mit einem offenen Ende, das in dem ersten Ende des Schraubenschafts ausgebildet ist, und einem verschlossenen Ende ausgebildet ist, das sich am zweiten Ende des Schraubenschafts befindet. Der Axialkanal kann streng parallel zur Mittelachse des Schraubenschafts und vorzugsweise entlang derselben verlaufen. Um dabei eine Fluidströmung durch den Axialkanal zu ermöglichen, ist in dem Schraubenschaft ferner wenigstens eine im Wesentlichen radial, vorzugsweise exakt radial, ausgerichtete Radialbohrung ausgebildet, welche von der Sacklochbohrung abzweigt und am zweiten Ende des Schraubenschafts bzw. angrenzend an den Ventilteller aus dem Schraubenschaft austritt. Somit kann in der zweiten Axialstellung des Ventilelements durch die Sacklochbohrung sowie die davon abzweigende Radialbohrung Luft aus der Atmosphäre ins Innere einer Vakuumpumpe strömen, die mit dem Flutventil ausgerüstet ist. In der zweiten Axialstellung des Ventilelements mündet also die wenigstens eine Radialbohrung in den Abstand, durch den der Ventilteller in der zweiten Axialstellung des Ventilelements von der zweiten Stirnfläche beabstandet ist, so dass durch diesen Abstand hindurch die Luft aus der Atmosphäre ins Innere der Pumpe strömen kann.

Um mehrere Flutszenarien mit unterschiedlichen Volumenströmen realisieren zu können, ist es erfindungsgemäß vorgesehen, dass in dem Schraubenschaft eine erste im Wesentlichen radial ausgerichtete Radialbohrung und zumindest eine zweite im Wesentlichen radial ausgerichtete Radialbohrung ausgebildet sind, wobei sich die erste Radialbohrung in ihrer Gesamtheit näher bei dem Ventilteller als die zweite Radialbohrung befindet. Die erste Radialbohrung tritt also näher an dem Ventilteller aus dem Schraubenschaft aus als die zweite Radialbohrung.

Mündet also in der zweiten Axialstellung des Ventilelements die erste Radialbohrung in der zuvor beschriebenen Weise in den Abstand, den der Ventilteller in der zweiten Axialstellung des Ventilelements gegenüber der zweiten Stirnfläche des Ventilgehäuses aufweist, so kann sich in dieser zweiten Axialstellung des Ventilelements die Mündung der zweiten Radialbohrung noch im Gewindebereich des Innengewindes der Durchgangsbohrung in dem Ventilgehäuse befinden, so dass durch die zweite Radialbohrung kein bzw. nur ein geringer Volumenstrom hindurchtreten kann. In der zweiten Axialstellung des Ventilelements steht also das Pumpeninnere mit der Außenatmosphäre nur über die Sacklochbohrung und die davon abzweigende erste Radialbohrung in Fluidverbindung. Soll hingegen in einem anderen Flutszenario ein größerer Volumenstrom realisiert werden, so kann das Ventilelement weiter ins Innere der Pumpe hineingeschraubt werden, so dass sich auch die Mündung der zweiten Radialbohrung im Abstand zwischen dem Ventilteller und der zweiten axialen Stirnfläche des Ventilgehäuses befindet. In einer derartigen dritten Axialstellung des Ventilelements steht somit die Außenatmosphäre über beide Radialkanäle mit dem Pumpeninneren in Fluidverbindung. Unter der Voraussetzung, dass der Strömungsquerschnitt der Sacklochbohrung nicht kleiner ist, als der kleinere Durchmesser der beiden Radialbohrungen, kann somit in der dritten Axialstellung des Ventilelements ein größerer Volumenstrom als in der zweiten Axialstellung des Ventilelements realisiert werden.

Um gezielt unterschiedliche Fluidszenarien mit zunehmendem Volumenstrom realisieren zu können, kann es gemäß einer weiteren Ausführungsform vorgesehen sein, dass der Bohrungsdurchmesser der zweiten Radialbohrung größer ist als der Bohrungsdurchmesser der ersten Radialbohrung. Ist in diesem Falle der Bohrungsdurchmesser der zweiten Radialbohrung kleiner oder gleich groß wie der Bohrungsdurchmesser der Sacklochbohrung, so ist in der dritten Axialstellung, in der beide Radialbohrungen in den Abstand zwischen dem Ventilteller und der zweiten axialen Stirnfläche des Ventilgehäuses münden, der erzielbare Volumenstrom durch die beiden Radialbohrungen größer als in der zweiten Axialstellung des Ventilelements, in der im Wesentlichen nur die erste Radialbohrung durchströmbar ist.

Da sich das zweite Ende des Schraubenschafts, an dem sich die beiden Radialbohrungen befinden, im in einer Vakuumpumpe eingebauten Zustand im Inneren derselben befindet und somit von außen nicht erkennbar ist, ob die Mündung der jeweiligen Radialbohrung bereits freiliegt oder noch durch das Ventilgehäuse verschlossen ist, kann es gemäß einer weiteren Ausführungsform vorgesehen sein, dass das Flutventil einen Arretiermechanismus aufweist, der bei Erreichen eines Abstands vorbestimmter Größe zwischen dem Ventilteller und der zweiten axialen Stirnfläche des Ventilgehäuses zwischen dem Ventilgehäuse und dem Ventilschaft wirksam ist bzw. wird. Der Abstand vorbestimmter Größe ist dabei so bemessen, dass in dieser Stellung die erste Radialbohrung in den Abstand zwischen Ventilteller und zweiter axialer Stirnfläche des Ventilgehäuses mündet und somit nicht mehr durch das Ventilgehäuse verschlossen ist. Der Arretiermechanismus kann dabei beispielsweise durch eine in radialer Richtung federvorgespannten Kugel im Inneren des Ventilgehäuses gebildet werden, welche durch die Federvorspannung gegen das Außengewinde des Ventilschafts gedrängt wird. Im Bereich des Außengewindes des Ventilschafts ist dabei eine punktuelle Vertiefung in Form einer Mulde ausgebildet, in die die Kugel bei Erreichen des Abstands vorbestimmter Größe und somit dann einrastet, wenn die zweite Axialstellung des Ventilelements erreicht ist. Bei Erreichen der zweiten Axialstellung des Ventilelements erhält somit eine Bedienperson durch das Einschnappen der Kugel in die Vertiefung eine haptische Rückmeldung über das Erreichen der zweiten Axialstellung des Ventilelements.

Zwar kann aufgrund der Tatsache, dass der Ventilteller in der ersten Axialstellung des Ventilelements an der zweiten axialen Stirnfläche des Ventilgehäuses anliegt, sichergestellt werden, dass keine Fluidströmung durch das Flutventil auftreten kann; besonders zuverlässig lässt sich jedoch das Ventilelement gegenüber dem Ventilgehäuse abdichten, wenn die Durchgangsbohrung über eine Kegelsenkung in die zweite axiale Stirnfläche des Ventilgehäuses übergeht und der Ventilteller auf seiner der zweiten axialen Stirnfläche zugewandten Seite einen komplementär zu der Kegelsenkung ausgebildeten kegelstumpfförmigen Abschnitt aufweist, der in der ersten Axialstellung des Ventilelements von der Kegelsenkung aufgenommen wird und an dieser anliegt. Eine an dem Ventilteller vorgesehene Dichtung kann somit in den konischen Umfangsspalt zwischen der Kegelsenkung und dem kegelstumpfförmigen Abschnitt des Ventiltellers gezogen werden, wenn das Ventilelement in seine erste Axialstellung überführt wird, wodurch besonders zuverlässig sichergestellt werden kann, dass in der ersten Axialstellung keine Fehlströmung durch das Flutventil hindurch auftreten kann.

Bei der bereits zuvor angesprochenen Dichtung kann es sich gemäß einer bevorzugten Ausführungsform um eine Ringdichtung handeln, die der Ventilteller auf seiner der zweiten axialen Stirnfläche zugewandten Seite radial außerhalb des kegelstumpfförmigen Abschnitts trägt. Vorzugsweise kann es sich dabei um eine Ringdichtung handeln, die an einen dazu konzentrischen Tragring aus Stahl anvulkanisiert ist. Derartige Dichtungen sind auch als Usit-Ringe bekannt, wobei der Tragring aus Stahl dazu dient, eine Überbeanspruchung des elastomeren Materials zu verhindern, aus dem die Ringdichtung besteht.

Gemäß noch einer weiteren Ausführungsform kann es vorgesehen sein, dass der Schraubenschaft an seinem zweiten Ende angrenzend an den Ventilteller eine umlaufende Ringnut mit einer Nuttiefe aufweist, die der Gewindetiefe des Außengewindes des Schraubenschafts entspricht oder geringfügig größer als diese ist. Mündet hierbei die erste Radialbohrung in die in Rede stehende Ringnut, so kann die erste Radialbohrung in dem Schraubenschaft unmittelbar benachbart zu dem Ventilteller und gegebenenfalls dessen kegelstumpfförmigen Abschnitt ausgebildet werden, ohne dass es erforderlich ist, das Außengewinde des Schraubenschafts bis zu dem Ventilteller zu führen. Der mit der Radialbohrung versehene Abschnitt des Schraubenschafts kann somit von der Durchgangsbohrung des Ventilgehäuses aufgenommen werden, ohne dabei mit deren Innengewinde zu kollidieren.

Damit das Flutventil intuitiv bedienbar ist, kann es gemäß einer weiteren Ausführungsform vorgesehen sein, dass das Außengewinde des Schraubenschafts und das Innengewinde des Ventilgehäuses als Linksgewinde ausgebildet sind. Wären die Gewinde hingegen als Rechtsgewinde ausgebildet, so müsste das Ventilelement zum Öffnen des Flutventils einer Rechtsdrehung unterworfen werden, wie dies normalerweise eher beim Schließen eines Verschlussorgans der Fall ist. Sind hingegen die in Rede stehenden Gewinde als Linksgewinde ausgebildet, so ist es zum Öffnen des Flutventils erforderlich, das Ventilelement einer Linksdrehung zu unterwerfen, wie dies üblicherweise bei Verschlussorganen der Fall ist. Eine Bedienperson kann sich somit sicher sein, dass das Flutventil geschlossen ist, wenn sich das Ventilelement nicht weiter nach rechts drehen lässt.

Da der Ventilteller vorzugsweise einstückig mit dem Ventilelement bzw. dem Schraubenschaft ausgebildet ist und in der ersten Axialstellung des Ventilelements an der zweiten axialen Stirnfläche des Ventilgehäuses anliegt, ist es erforderlich, das Ventilelement im Rahmen des Zusammenbaus des Flutventils mit dem ersten Ende des Schraubenschafts voraus in die Durchgangsbohrung des Ventilgehäuses einzuschrauben. Um dies zu ermöglichen, handelt es sich bei dem Drehantrieb um einen Schraubenkopf, der als separates Bauteil an dem ersten Ende des Schraubenschafts erst dann befestigt wird, nachdem das Ventilelement in das Ventilgehäuse eingeschraubt wurde. Der Schraubenkopf ist also nicht integral mit dem Schraubenschaft ausgebildet, um den Zusammenbau des erfindungsgemäßen Flutventils zu ermöglichen.

Um das Flutventil in einer Flutöffnung einer Vakuumpumpe befestigen zu können, kann es gemäß einer weiteren Ausführungsform vorgesehen sein, dass das Ventilgehäuse ein Außengewinde aufweist, über das sich das Außengewinde und damit das Flutventil in das Innengewinde der Flutöffnung einer Vakuumpumpe einschrauben lässt. Als Drehantrieb kann dabei das Ventilgehäuse zwischen dem Außengewinde und der ersten axialen Stirnfläche des Ventilgehäuses eine regelmäßige polygonale Struktur mit vorzugsweise hexagonalem Querschnitt wie eine Schraubmutter aufweisen, wobei die in Rede stehende polygonale Struktur eine dem Außengewinde zugewandte radial ausgerichtete Ringschulter ausbildet, welche im eingeschraubten Zustand des Ventilgehäuses in der Flutöffnung abdichtend mit dem Ventilgehäuse verspannt wird. Vorzugsweise kann dabei die Ringschulter eine Ringdichtung tragen, wobei es insbesondere vorgesehen sein kann, dass es sich bei der in Rede stehenden Ringdichtung um eine Usit-Ringdichtung handelt, bei der die Ringdichtung an einen dazu konzentrischen Tragring aus Stahl anvulkanisiert ist.

Gemäß einem weiteren Aspekt der vorliegenden Erfindung wird ferner erstmals eine Vakuumpumpe, insbesondere eine Turbomolekularvakuumpumpe, vorgestellt, die sich durch die Merkmale des Anspruchs 11 auszeichnet. Die Vakuumpumpe weist ein Gehäuse auf, in dem sich zumindest eine Pumpstufe befindet, wobei in dem Gehäuse eine Flutöffnung ausgebildet ist, die in die zumindest eine Pumpstufe mündet und die das Ventilgehäuse eines Flutventils aufnimmt, welches gemäß einem der Ansprüche 1 bis 10 ausgebildet ist.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine perspektivische Schemadarstellung eines erfindungsgemäßen Flutventils;

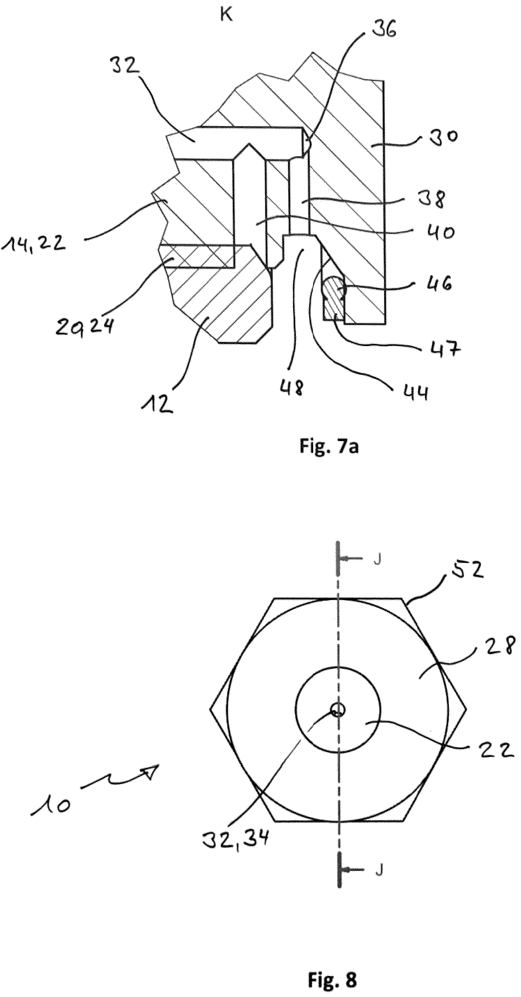

- Fig. 7: einen Längsschnitt durch ein erfindungsgemäßen Flutventil gemäß der Schnittführung J - J der Fig. 8;
- Fig. 7a: das Detail "K" der Fig. 7 in vergrößerter Darstellung; und
- Fig. 8: eine Frontalansicht des Flutventils der Fig. 6;

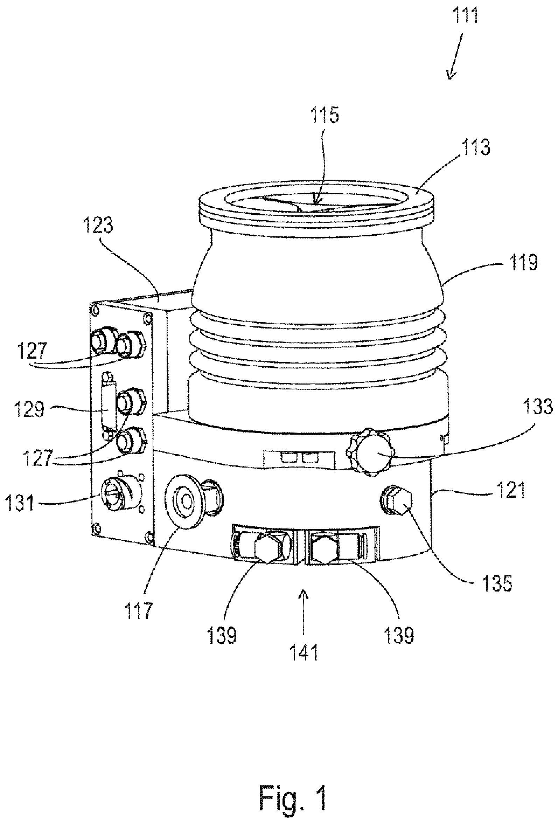

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

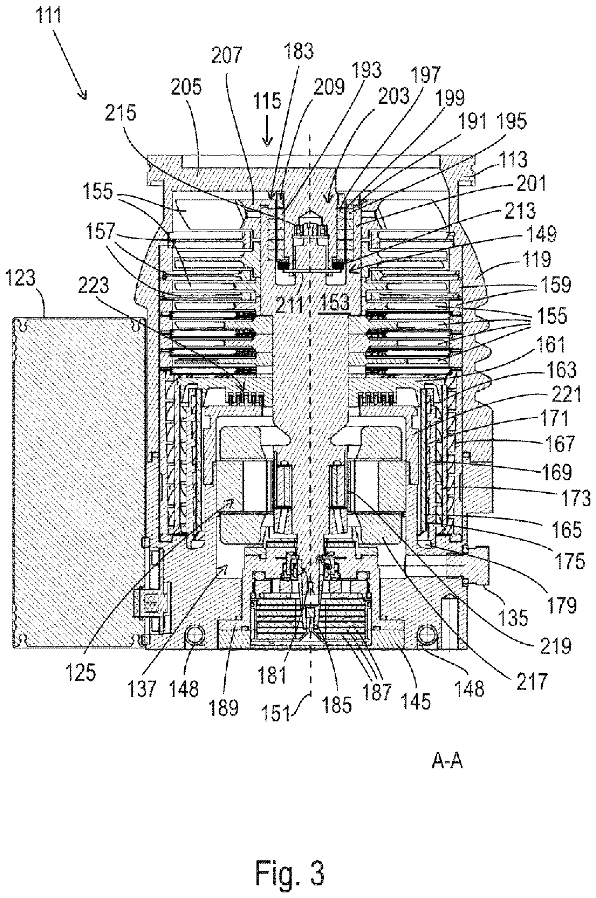

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125 (vgl. auch Fig. 3). Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Es existieren auch Turbomolekularpumpen, die kein derartiges angebrachtes Elektronikgehäuse aufweisen, sondern an eine externe Antriebselektronik angeschlossen werden.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, eingelassen werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann. Andere existierende Turbomolekularvakuumpumpen (nicht dargestellt) werden ausschließlich mit Luftkühlung betrieben.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann. Grundsätzlich sind dabei beliebige Winkel möglich.

Andere existierende Turbomolekularvakuumpumpen (nicht dargestellt), die insbesondere größer sind als die hier dargestellte Pumpe, können nicht stehend betrieben werden.

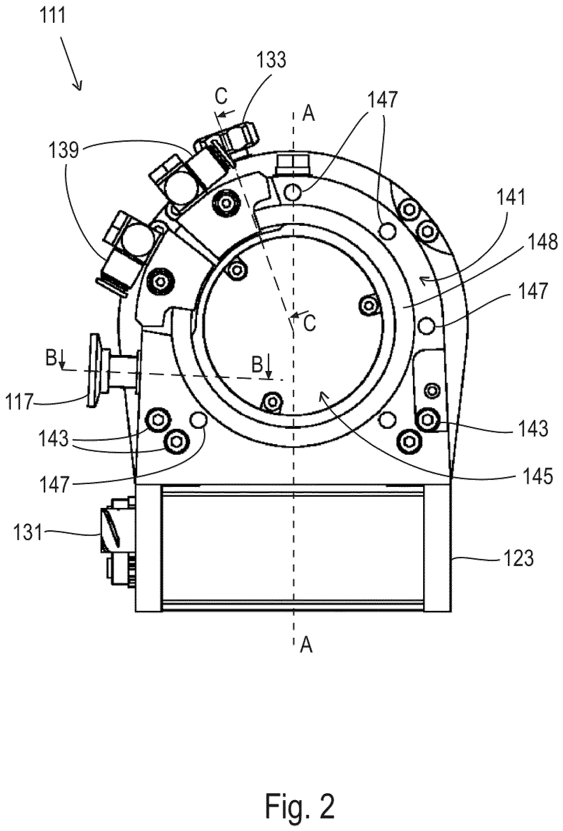

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann. Dies ist bei anderen existierenden Turbomolekularvakuumpumpen (nicht dargestellt), die insbesondere größer sind als die hier dargestellte Pumpe, nicht möglich.

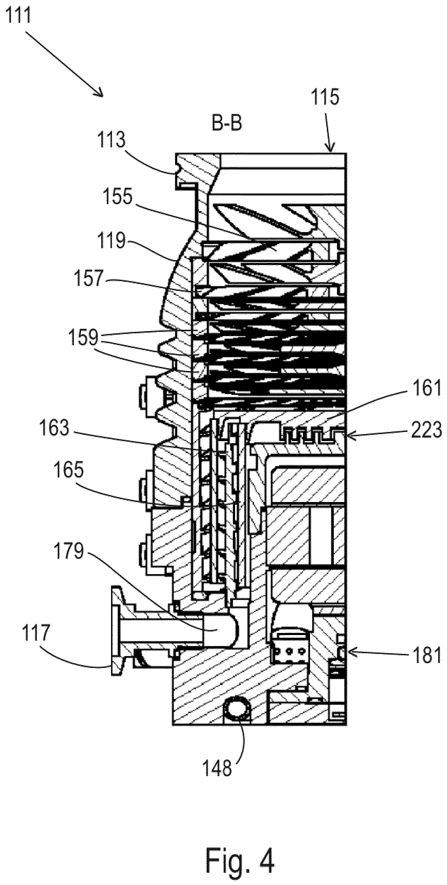

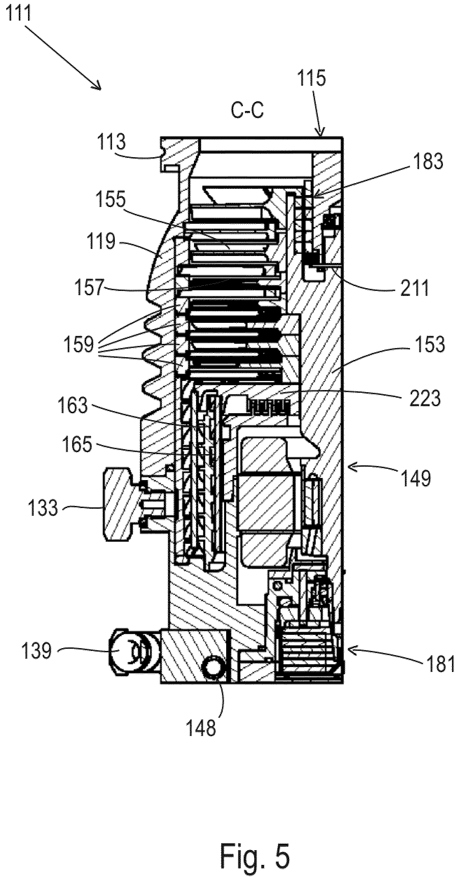

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Es existieren andere Turbomolekularvakuumpumpen (nicht dargestellt), die keine Holweck-Pumpstufen aufweisen.

Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 167, 169 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Bei anderen existierenden Turbomolekularvakuumpumpen (nicht dargestellt) kann anstelle einer Spritzmutter eine Spritzschraube vorgesehen sein. Da somit unterschiedliche Ausführungen möglich sind, wird in diesem Zusammenhang auch der Begriff "Spritzspitze" verwendet.

Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 201 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, damit eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Wie bereits zuvor erwähnt wurde, kann die zuvor beschriebene Turbomolekularvakuumpumpe 111 über ein Flutventil 133 geflutet werden, wobei es sich bei diesem Flutventil 133 um eine einfache Flutschraube handelt, die in eine entsprechende Flutöffnung des Gehäuses 119 eingeschraubt ist. Dieses Flutventil 133 in Form einer einfachen Flutschraube kann durch das erfindungsgemäße Flutventil 10 ersetzt werden, welches in entsprechender Weise in die Flutöffnung des Pumpengehäuses 119 eingeschraubt werden kann.

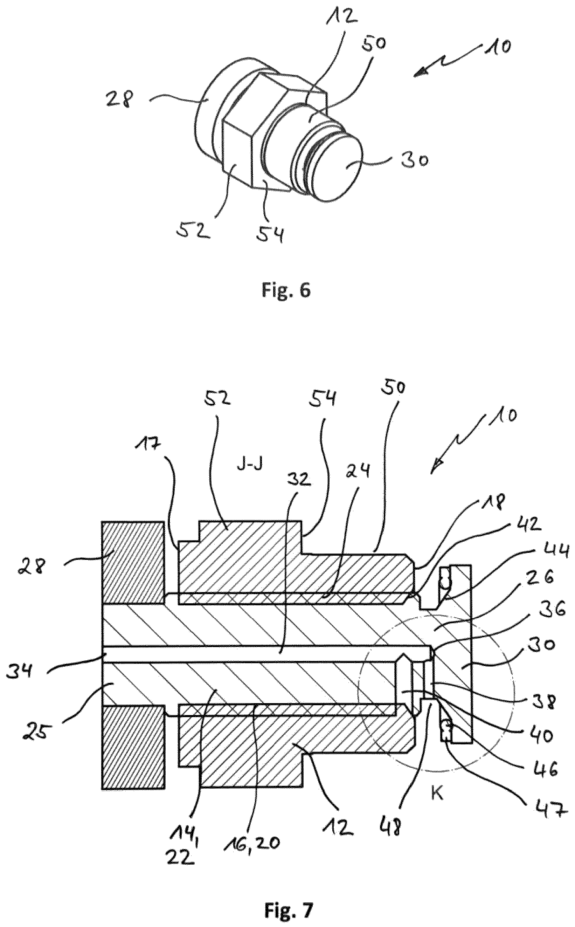

Eine Ausführungsform eines erfindungsgemäßen Flutventils 10 wird nun nachfolgend unter Bezugnahme auf die Fig. 6ff. beschrieben.

Das in perspektivischer Darstellung in der Fig. 6 dargestellte Flutventil 10 weist ein Ventilgehäuse 12 und ein davon aufgenommenes Ventilelement 14 auf, wobei das Ventilgehäuse 12 außenumfangsseitig ein Außengewinde 50 aufweist, über das das Ventilgehäuse 12 in die Flutöffnung der Vakuumpumpe 111 eingeschraubt werden kann. Ferner bildet das Ventilgehäuse 12 an seinem Außenumfang eine sechskantförmige Kontur 52 wie eine Schraubmutter aus, wobei die sechskantförmige Kontur 52 an der dem Außengewinde 50 zugewandten Seite eine Ringschulter 54 ausbildet. Über die sechskantförmige Kontur 52 lässt sich das Ventilgehäuse 12 mittels eines Gabelschlüssels in die Flutöffnung der Vakuumpumpe 111 einschrauben, so dass die Ringschulter 54 mit dem Gehäuse 119 unter Zwischenschaltung einer Ringdichtung (nicht dargestellt) wie beispielsweise einem Usit-Ring dichtend in Anlage gelangt.

Das Ventilgehäuse 12 weist benachbart zu der sechskantförmigen Kontur 52 eine erste axiale Stirnfläche 17 und benachbart zu dem Außengewinde 50 eine zweite axiale Stirnfläche 18 auf. Zwischen diesen beiden axialen Stirnflächen 18, 20 erstreckt sich durch das Ventilgehäuse 12 eine Durchgangsbohrung 16, welche mit einem Innengewinde 20 versehen ist und an der zweiten axialen Stirnfläche 18 in diese über eine Kegelsenkung 42 übergeht.

Das von dem Ventilgehäuse 12 aufgenommene Ventilelement 14 weist ein Außengewinde 24 auf, so dass der Schaft des Ventilelements 14 auch als Schraubenschaft 22 bezeichnet werden kann. Das Ventilelement 14 ist über das Außengewinde 24 in das Innengewinde 20 der Durchgangsbohrung 16 eingeschraubt, so dass sich durch Drehung des Ventilelements 14 die Axialstellung des Ventilelements 14 gegenüber dem Ventilgehäuse 12 verändern lässt. Vorzugsweise sind die beiden in Rede stehenden Gewinde 20, 24 dabei als Linksgewinde ausgebildet, so dass sich das Flutventil 10 durch die Linksdrehung des Ventilelements 14 öffnen lässt, wie dies üblicherweise bei Verschlussorganen der Fall ist.

Zur Betätigung des Ventilelements 14 weist dieses an seinem ersten Ende 25 benachbart der ersten axialen Stirnfläche 17 des Ventilgehäuses 12 einen Drehantrieb in Form eines nicht integral mit dem Schraubenschaft 22 ausgebildeten Schraubenkopf 28 auf, welcher erst dann auf dem ersten Ende 25 des Schraubenschafts 22 montiert wird, nachdem dieser mit seinem ersten Ende 25 voraus in die Durchgangsbohrung 16 ein und durch diese hindurchgeschraubt wurde.

An seinem dem Schraubenkopf 28 gegenüberliegenden zweiten Ende 26 weist der Schraubenschaft 22 einen integral mit dem Schraubenschaft 22 auegebildeten Ventilteller 30 auf, welcher zur bedarfsweisen Abdichtung der Durchgangsbohrung 16 dient. Wie der Fig. 2 entnommen werden kann, weist der Ventilteller 30 auf seiner der zweiten axialen Stirnfläche 18 zugewandten Seite einen komplementär zu der Kegelsenkung 32 ausgebildeten kegelstumpfförmigen Abschnitt 44 auf. Radial außerhalb des in Rede stehenden kegelstumpfförmigen Abschnitts 44 trägt der Ventilteller 30 auf seiner der zweiten axialen Stirnfläche 18 zugewandten Seite eine Ringdichtung 46, die an einem dazu konzentrischen Tragring 47 aus Stahl anvulkanisiert ist.

Insbesondere dann, wenn das Ventilelement 14 durch Rechtsdrehung so weit aus dem Ventilgehäuse 12 herausgeschraubt wurde, dass der Ventilteller 30 über daran vorgesehene Ringdichtung 46 an der zweiten axialen Stirnfläche 18 des Ventilgehäuses 12 anliegt, wird die Durchgangsbohrung 16 und somit das Flutventil 10 geschlossen. Diese Stellung des Ventilelements wird hier auch als erste Axialstellung des Ventilelements 14 bezeichnet. Hierbei wird die Ringdichtung 46 in den konischen Ringspalt zwischen der Kegelsenkung 42 und dem kegelförmigen Abschnitt 44 hineingezwängt, wobei jedoch eine mechanische Überbeanspruchung des Elastomermaterials, aus dem die Ringdichtung 46 besteht, dabei durch den Tragring 47 verhindert wird.

Wird das Ventilelement 14 ausgehend aus der ersten Axialstellung über den Schraubenkopf 28 einer Linksdrehung unterworfen, so wird das Ventilelement 14 ein Stück weit in das Ventilgehäuse 12 hineingeschraubt, so dass zwischen dem Ventilteller 30 und der zweiten axialen Stirnfläche 18 des Ventilgehäuses 12 ein Abstand A entsteht. Diese Stellung, in der der Ventilteller 30 durch einen Abstand A von der zweiten axialen Stirnfläche 18 beabstandet ist, wird hier auch als zweite Axialstellung des Ventilelements 14 bezeichnet. Diese zweite Axialstellung zeigt die Fig. 2.

Da in der zweiten Axialstellung der Ventilteller 30 nicht dichtend an der zweiten axialen Stirnfläche 18 des Ventilgehäuses 12 anliegt, kann bereits aufgrund des Gewindespiels zwischen dem Innengewinde 20 der Ventilbohrung 16 und dem Außengewinde 24 des Schraubenschafts 22 Luft aus der Atmosphäre durch die Durchgangsbohrung 16 bzw. das Gewindespiel ins Innere der Pumpe 111 gelangen, um so dieselbe allmählich zu fluten.

Da jedoch der durch das Gewindespiel mögliche Volumenstrom begrenzt ist, ist es erfindungsgemäß vorgesehen, dass der Schraubenschaft 22 entlang seiner Mittelachse einen Axialkanal in Form einer Sacklochbohrung 32 aufweist, von dessen geschlossenem Ende 36 eine erste Radialbohrung 38 abzweigt, welche in eine Ringnut 48 am zweiten Ende 26 des Schraubenschafts 22 mündet. Die Tiefe der in Rede stehenden Ringnut 48 entspricht dabei im Wesentlichen der Gewindetiefe des Außengewindes 24 des Schraubenschafts 22. Ohne diese Ringnut 48 müsste das Außengewinde 24 des Schraubenschafts 22 bis zu dem Ventilteller 30 verlängert werden, um das Ventilelement 14 so weit herausschrauben zu können, bis der Ventilteller 30 mit der zweiten axialen Stirnfläche 18 in Anlage gelangt.

Da die erste Radialbohrung 38 in der zweiten Axialstellung des Ventilelements 14 in den Abstand A zwischen Ventilteller 30 und zweiter axialer Stirnfläche 18 des Ventilgehäuses 12 mündet, steht in der zweiten Axialstellung des Ventilelements 14 die Außenatmosphäre mit dem Inneren der Vakuumpumpe 111 über die Sacklochbohrung 32 sowie die davon abzweigende erste Radialbohrung 38 in Fluidverbindung, so dass Luft aus der Außenatmosphäre durch die Sacklochbohrung 32 und die erste Radialbohrung 38 ins Pumpeninnere strömen kann, um die Pumpe 111 zu fluten.

Wie insbesondere der vergrößerten Detaildarstellung der Fig. 2A entnommen werden kann, zweigt von der Sacklochbohrung 32 eine zweite Radialbohrung 40 ab. Die erste Radialbohrung 38 befindet sich dabei näher an dem Ventilteller 30 als die zweite Radialbohrung 40 und weist einen etwas kleineren Bohrungsdurchmesser als die zweite Radialbohrung 40 auf, deren Bohrungsdurchmesser dem Bohrungsdurchmesser der Sacklochbohrung 32 entspricht.

Die zweite Radialbohrung 40 dient dabei zur Realisierung eines zweiten Flutszenarios, welches sich dadurch auszeichnet, dass sich in diesem die Pumpe 111 mit einem Volumenstrom fluten lässt, welcher größer als der Volumenstrom ist, der sich allein durch die erste Radialbohrung 38 erzielbar ist. Dies ist der Grund dafür, dass der Bohrungsdurchmesser der zweiten Radialbohrung 40 größer ist als der der ersten Radialbohrung 38. Da sich die zweite Radialbohrung 40 in der zweiten Axialstellung des Ventilelements 40 noch in der Durchgangsbohrung 16 befindet und somit weitestgehend nicht durchströmt werden kann, ist es erforderlich, das Ventilelement 14 noch weiter in das Ventilgehäuse 12 hineinzuschrauben, um die Pumpe 111 über die zweite Radialbohrung 40 fluten zu können. Mündet in solch einer dritten Axialstellung sowohl die erste Radialbohrung 38 als auch die zweite Radialbohrung 40 in einen gegenüber der zweiten Axialstellung vergrößerten Abstand zwischen Ventilteller 30 und zweiter axialer Stirnfläche 18 des Ventilgehäuses 12, so kann in dieser dritten Axialstellung Luft aus der Atmosphäre durch die Sacklochbohrung 32 und beide Radialbohrungen 38, 40 ins Innere der Pumpe 111 gelangen. Um die Pumpe 111 also möglichst schnell mit Luft aus der Atmosphäre fluten zu können, kann das Ventilelement 14 in die zuvor beschriebene dritte Axialstellung überführt werden, da in dieser beide Radialbohrungen 38, 40 eine Fluidverbindung zwischen Außenatmosphäre und dem Inneren der Pumpe 111 ermöglichen.

### Bezugszeichenliste

- 10: Flutventil
- 12: Ventilgehäuse
- 14: Ventilelement
- 16: Durchgangsbohrung
- 17: erste axiale Stirnfläche
- 18: zweite axiale Stirnfläche
- 20: Innengewinde
- 22: Schraubenschaft
- 24: Außengewinde
- 25: erstes Ende von 22
- 26: zweites Ende von 22
- 28: Schraubenkopf / Drehantrieb
- 30: Ventilteller
- 32: Sacklochbohrung
- 34: offenes Ende
- 36: geschlossenes Ende
- 38: erste Radialbohrung
- 40: zweite Radialbohrung
- 42: Kegelsenkung
- 44: kegelstumpfförmiger Abschnitt
- 46: Ringdichtung
- 47: Tragring
- 48: Ringnut
- 50: Außengewinde
- 52: sechskantförmige Kontur
- 54: Ringschulter
- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

- A: Abstand

## Patentansprüche

1. Flutventil (10) zum Öffnen und Schließen einer Flutöffnung in einem Gehäuse (119) einer Vakuumpumpe (111), insbesondere einer Turbomolekularvakuumpumpe (111), mit einem Ventilgehäuse (12) zur Aufnahme in einer Flutöffnung einer Vakuumpumpe (111) und einem von dem Ventilgehäuse (12) aufgenommenen Ventilelement (14), wobei das Ventilgehäuse (12) von einer Durchgangsbohrung (16) durchsetzt ist, die sich von einer ersten axialen Stirnfläche (17) zu einer zweiten axialen Stirnfläche (18) des Ventilgehäuses (12) erstreckt und ein Innengewinde (20) aufweist, und das Ventilelement (14) einen Schraubenschaft (22) mit einem Außengewinde (24) aufweist, mit dem das Ventilelement (14) in das Innengewinde (20) der Durchgangsbohrung (16) eingeschraubt ist, wobei der Schraubenschaft (22) an einem ersten Ende (25) einen Drehantrieb (28) zur Betätigung des Ventilelements (14) zur Veränderung der Axialstellung des Ventilelements (14) gegenüber dem Ventilgehäuse (12) zwischen einer ersten und einer zweiten Axialstellung des Ventilelements (14) und an einem gegenüberliegenden zweiten Ende (26) einen Ventilteller (30) aufweist, der in 11 der zweiten Axialstellung des Ventilelements (14) einen Abstand (A) gegenüber der zweiten Stirnfläche (18) aufweist;
wobei der Schraubenschaft (22) einen Axialkanal (32) aufweist, der nur in der zweiten Axialstellung eine Fluidverbindung durch den Schraubenschaft (22) zur Flutung einer Vakuumpumpe (111) ermöglicht;
wobei der Axialkanal (32) eine Sacklochbohrung (32) mit einem offenen Ende (34), das in dem ersten Ende (25) des Schraubenschafts (22) ausgebildet ist, und einem verschlossenen Ende (36) umfasst;
**dadurch gekennzeichnet , dass**
der Ventilteller (30) in der ersten Axialstellung des Ventilelements (14) zur Abdichtung der Durchgangsbohrung (16) an der zweiten Stirnfläche (18) des Ventilgehäuses (12) anliegt;
wobei in dem Schraubenschaft (22) ferner eine erste im Wesentlichen radial ausgerichtete Radialbohrung (38) und zumindest eine zweite im Wesentlichen radial ausgerichtete Radialbohrung (40) ausgebildet sind, die von der Sacklochbohrung (32) abzweigen und am zweiten Ende (26) aus dem Schraubenschaft (22) austreten, wobei sich die erste Radialbohrung (38) in ihrer Gesamtheit näher bei dem Ventilteller (30) als die zweite Radialbohrung (40) befindet; und
wobei das Ventilelement (14) eine dritte Stellung aufweist, in der der Abstand zwischen dem Ventilteller (30) und der zweiten axialen Stirnfläche (18) größer ist als in der zweiten Stellung, wobei in der dritten Stellung sowohl die erste Radialbohrung (38) als auch die zweite Radialbohrung (40) in den Abstand zwischen dem Ventilteller (30) und der zweiten axialen Stirnfläche (18) münden.

2. Flutventil (10) nach Anspruch 1,
wobei der Bohrungsdurchmesser der zweiten Radialbohrung (40) größer als der Bohrungsdurchmesser der ersten Radialbohrung (38) ist, wobei es vorzugsweise vorgesehen ist, dass der Bohrungsdurchmesser der zweiten Radialbohrung (40) kleiner oder gleich groß ist wie der Bohrungsdurchmesser der Sacklochbohrung (32).

3. Flutventil (10) nach Anspruch 1 oder 2,
wobei die Durchgangsbohrung (16) über eine Kegelsenkung (42) in die zweite axiale Stirnfläche (18) übergeht, und wobei der Ventilteller (30) auf seiner der zweiten axialen Stirnfläche (18) zugewandten Seite einen komplementär zu der Kegelsenkung (42) ausgebildeten kegelstumpfförmigen Abschnitt (44) aufweist, der in der ersten Axialstellung des Ventilelements (14) von der Kegelsenkung (42) aufgenommen wird.

4. Flutventil (10) nach Anspruch 3,
wobei der Ventilteller (30) auf seiner der zweiten axialen Stirnfläche (18) zugewandten Seite radial außerhalb des kegelstumpfförmigen Abschnitts (44) eine Ringdichtung (46) trägt, wobei es insbesondere vorgesehen ist, dass die Ringdichtung (46) an einen dazu konzentrischen Tragring (47) aus Stahl anvulkanisiert ist.

5. Flutventil (10) nach einem der vorstehenden Ansprüche,
wobei der Schraubenschaft (22) an seinem zweiten Ende (25) angrenzend an den Ventilteller (30) eine umlaufende Nut (48) mit einer Nuttiefe aufweist, die der Gewindetiefe des Außengewindes (24) des Schraubenschafts (22) entspricht oder größer als die Gewindetiefe des Außengewindes (24) des Schraubenschafts (22) ist.

6. Flutventil (10) nach einem der vorstehenden Ansprüche,
wobei das Außengewinde (24) des Schraubenschafts (22) und das Innengewinde (20) des Ventilgehäuses (12) als Linksgewinde ausgebildet sind.

7. Flutventil (10) nach einem der vorstehenden Ansprüche,
wobei der Schraubenschaft (22) an seinem ersten Ende (25) als Drehantrieb einen Schraubenkopf trägt, der an dem ersten Ende (25) des Schraubenschafts (22) befestigt ist.

8. Flutventil (10) nach einem der vorstehenden Ansprüche,
wobei das Ventilgehäuse (12) ein Außengewinde (24) zur Einschraubung des Flutventils (10) in eine Flutöffnung einer Vakuumpumpe (111) aufweist, wobei es insbesondere vorgesehen ist, dass das Ventilgehäuse (12) zwischen dem Außengewinde (24) und der ersten axialen Stirnfläche (17) des Ventilgehäuses (12) eine regelmäßige polygonale Kontur (52) mit vorzugsweise hexagonalem Querschnitt aufweist, die eine dem Außengewinde (24) zugewandte radial ausgerichtete Ringschulter (54) ausbildet.

9. Flutventil (10) nach Anspruch 8,
wobei die Ringschulter (54) eine Ringdichtung trägt, wobei es insbesondere vorgesehen ist, dass die Ringdichtung an einen dazu konzentrischen Tragring aus Stahl anvulkanisiert ist.

10. Flutventil (10) nach einem der vorstehenden Ansprüche,
wobei das Flutventil (10) einen Arretiermechanismus aufweist, der bei Erreichen eines Abstands vorbestimmter Größe zwischen dem Ventilteller (30) und der zweiten axialen Stirnfläche (18) des Ventilgehäuses (12) zwischen dem Ventilgehäuse (12) und dem Ventilelement (14) wirksam wird/ist.

11. Vakuumpumpe (111), insbesondere Turbomolekularvakuumpumpe (111), mit einem Flutventil (10) nach einem der vorstehenden Ansprüche und einem Gehäuse (119), in dem sich zumindest eine Pumpstufe befindet, wobei in dem Gehäuse (119) eine Flutöffnung ausgebildet ist, die in die zumindest eine Pumpstufe mündet und die das Ventilgehäuse (12) des Flutventils (10) aufnimmt.

## Claims

1. A flood valve (10) for opening and closing a flood opening in a housing (119) of a vacuum pump (111), in particular a turbomolecular vacuum pump (111), said flood valve (10) comprising a valve housing (12) to be received in a flood opening of a vacuum pump (111) and a valve element (14) received by the valve housing (12), wherein the valve housing (12) is penetrated by a passage bore (16), which extends from a first axial end face (17) to a second axial end face (18) of the valve housing (12) and which has an internal thread (20), and the valve element (14) has a screw shaft (22) having an external thread (24), with which the valve element (14) is screwed into the internal thread (20) of the passage bore (16), wherein the screw shaft (22) has, at a first end (25), a rotary drive (28) for actuating the valve element (14) in order to change the axial position of the valve element (14) relative to the valve housing (12) between a first and a second axial position of the valve element (14) and, at an oppositely disposed second end (26), a valve disk (30) which has a distance (A) relative to the second end face (18) in the second axial position of the valve element (14);
wherein the screw shaft (22) has an axial passage (32) which, only in the second axial position, enables a fluid connection through the screw shaft (22) for flooding a vacuum pump (111);
wherein the axial passage (32) comprises a blind bore (32) having an open end (34), which is formed in the first end (25) of the screw shaft (22), and a closed end (36),
**characterized in that**,
in the first axial position of the valve element (14), the valve disk (30) contacts the second end face (18) of the valve housing (12) to seal the passage bore (16);
wherein, in the screw shaft (22), a first substantially radially oriented radial bore (38) and at least a second substantially radially oriented radial bore (40) are further formed that branch off from the blind bore (32) and that exit from the screw shaft (22) at the second end (26), wherein the first radial bore (38) in its entirety is located closer to the valve disk (30) than the second radial bore (40); and
wherein the valve element (14) has a third position in which the distance between the valve disk (30) and the second axial end face (18) is larger than in the second position, wherein, in the third position, both the first radial bore (38) and the second radial bore (40) open into the distance between the valve disk (30) and the second axial end face (18).

2. A flood valve (10) according to claim 1,
wherein the bore diameter of the second radial bore (40) is larger than the bore diameter of the first radial bore (38), wherein it is preferably provided that the bore diameter of the second radial bore (40) is smaller than or of the same size as the bore diameter of the blind bore (32).

3. A flood valve (10) according to claim 1 or 2,
wherein the passage bore (16) merges into the second axial end face (18) via a countersink (42), and wherein the valve disk (30) has, at its side facing the second axial end face (18), a frustoconical section (44) which is formed in a complementary manner to the countersink (42) and which is received by the countersink (42) in the first axial position of the valve element (14).

4. A flood valve (10) according to claim 3,
wherein the valve disk (30) carries a ring seal (46) at its side facing the second axial end face (18) radially outside the frustoconical section (44), wherein it is in particular provided that the ring seal (46) is vulcanized onto a support ring (47) composed of steel that is concentric to said ring seal.

5. A flood valve (10) according to any one of the preceding claims,
wherein the screw shaft (22) has, at its second end (25), adjacent to the valve disk (30) a circumferential groove (48) having a groove depth which corresponds to the thread depth of the external thread (24) of the screw shaft (22) or is larger than the thread depth of the external thread (24) of the screw shaft (22).

6. A flood valve (10) according to any one of the preceding claims,
wherein the external thread (24) of the screw shaft (22) and the internal thread (20) of the valve housing (12) are configured as a left-hand thread.

7. A flood valve (10) according to any one of the preceding claims,
wherein the screw shaft (22) carries a screw head as a rotary drive at its first end (25), which screw head is fastened to the first end (25) of the screw shaft (22).

8. A flood valve (10) according to any one of the preceding claims,
wherein the valve housing (12) has an external thread (24) for screwing the flood valve (10) into a flood opening of a vacuum pump (111), wherein it is in particular provided that the valve housing (12) has, between the external thread (24) and the first axial end face (17) of the valve housing (12), a regular polygonal contour (52) which has a preferably hexagonal crosssection and which forms a radially oriented ring shoulder (54) facing the external thread (24).

9. A flood valve (10) according to claim 8,
wherein the ring shoulder (54) carries a ring seal, wherein it is in particular provided that the ring seal is vulcanized onto a support ring composed of steel that is concentric to said ring seal.

10. A flood valve (10) according to any one of the preceding claims,
wherein the flood valve (10) has a locking mechanism which becomes/is active between the valve housing (12) and the valve element (14) when a distance of a predetermined size is reached between the valve disk (30) and the second axial end face (18) of the valve housing (12).

11. A vacuum pump (111), in particular a turbomolecular vacuum pump (111), comprising a flood valve (10) according to any one of the preceding claims and a housing (119) in which at least one pump stage is located, wherein a flood opening is formed in the housing (119), opens into the at least one pump stage and receives the valve housing (12) of the flood valve (10).

## Revendications

1. Soupape de remise à l'air (10) pour ouvrir et fermer un orifice de remise à l'air dans un carter (119) d'une pompe à vide (111), en particulier d'une pompe à vide turbomoléculaire (111), comprenant un corps de soupape (12), destiné à être logé dans un orifice de remise à l'air d'une pompe à vide (111), et un élément de soupape (14), logé dans le corps de soupape (12),
dans laquelle
le corps de soupape (12) est traversé par un alésage traversant (16) qui s'étend d'une première surface frontale axiale (17) à une deuxième surface frontale axiale (18) du corps de soupape (12) et qui présente un taraudage (20), et l'élément de soupape (14) présente une tige filetée (22) munie d'un filetage (24) avec lequel l'élément de soupape (14) est vissé dans le taraudage (20) de l'alésage traversant (16),
la tige filetée (22) présente, à une première extrémité (25), un entraînement rotatif (28) pour actionner l'élément de soupape (14) afin de modifier la position axiale de l'élément de soupape (14) par rapport au corps de soupape (12) entre une première et une deuxième position axiale de l'élément de soupape (14) et, à une deuxième extrémité opposée (26), une tête de soupape (30) qui, dans la deuxième position axiale de l'élément de soupape (14), présente un intervalle (A) par rapport à la deuxième surface frontale (18) ;
la tige filetée (22) présente un canal axial (32) qui ne permet que dans la deuxième position axiale une communication fluidique à travers la tige filetée (22) pour remettre à l'air une pompe à vide (111) ;
le canal axial (32) présente un trou borgne (32) ayant une extrémité ouverte (34), formée dans la première extrémité (25) de la tige filetée (22), et une extrémité fermée (36) ;
**caractérisée en ce que**
dans la première position axiale de l'élément de soupape (14), la tête de soupape (30) s'appuie contre la deuxième surface frontale (18) du corps de soupape (12) afin d'assurer l'étanchéité de l'alésage traversant (16) ;
la tige filetée (22) présente en outre un premier alésage radial (38, 40) orienté sensiblement radialement et au moins un deuxième alésage radial (40) orienté sensiblement radialement, qui bifurquent à partir de trou borgne (32) et sortent de la tige filetée (22) au niveau de la deuxième extrémité (26), le premier alésage radial (38) étant dans son ensemble plus proche de la tête de soupape (30) que le deuxième alésage radial (40) ; et
l'élément de soupape (14) présente une troisième position dans laquelle l'intervalle entre la tête de soupape (30) et la deuxième surface frontale axiale (18) est plus grand que dans la deuxième position, sachant que dans la troisième position, le premier alésage radial (38) et le deuxième alésage radial (40) débouchent tous deux dans l'intervalle entre la tête de soupape (30) et la deuxième surface frontale axiale (18).

2. Soupape de remise à l'air (10) selon la revendication 1,
dans laquelle le diamètre du deuxième alésage radial (40) est supérieur au diamètre du premier alésage radial (38),
de préférence, il est prévu que le diamètre du deuxième alésage radial (40) soit inférieur ou égal au diamètre du trou borgne (32).

3. Soupape de remise à l'air (10) selon la revendication 1 ou 2,
dans laquelle l'alésage traversant (16) se prolonge par un lamage conique (42) dans la deuxième surface frontale axiale (18), et
la tête de soupape (30) présente, sur son côté tourné vers la deuxième surface frontale axiale (18), une partie tronconique (44) complémentaire au lamage conique (42), qui est logée dans le lamage conique (42), dans la première position axiale de l'élément de soupape (14).

4. Soupape de remise à l'air (10) selon la revendication 3,
dans laquelle la tête de soupape (30) porte, sur son côté tourné vers la deuxième surface frontale axiale (18), un joint d'étanchéité annulaire (46) situé radialement à l'extérieur de la partie tronconique (44), et
il est en particulier prévu que le joint d'étanchéité annulaire (46) soit vulcanisé sur un anneau de support (47) en acier concentrique à celui-ci.

5. Soupape de remise à l'air (10) selon l'une des revendications précédentes, dans laquelle la tige filetée (22) présente, à sa deuxième extrémité (25) adjacente à la tête de soupape (30), une rainure périphérique (48) dont la profondeur correspond à la profondeur du filetage (24) de la tige filetée (22) ou est supérieure à la profondeur du filetage (24) de la tige filetée (22).

6. Soupape de remise à l'air (10) selon l'une des revendications précédentes, dans laquelle le filetage (24) de la tige filetée (22) et le taraudage (20) du corps de soupape (12) sont réalisés sous forme de filetage/taraudage à gauche.

7. Soupape de remise à l'air (10) selon l'une des revendications précédentes, dans laquelle la tige filetée (22) porte, à sa première extrémité (25), une tête de vis qui sert d'entraînement rotatif et qui est fixée à la première extrémité (25) de la tige filetée (22).

8. Soupape de remise à l'air (10) selon l'une des revendications précédentes, dans laquelle le corps de soupape (12) présente un filetage (24) pour visser la soupape de remise à l'air (10) dans un orifice de remise à l'air d'une pompe à vide (111), et
il est en particulier prévu que le corps de soupape (12) présente, entre le filetage (24) et la première surface frontale axiale (17) du corps de soupape (12), un contour polygonal régulier (52) de préférence de section transversale hexagonale, qui forme un épaulement annulaire (54) orienté radialement et tourné vers le filetage (24).

9. Soupape de remise à l'air (10) selon la revendication 8,
dans laquelle l'épaulement annulaire (54) porte un joint d'étanchéité annulaire, et
il est en particulier prévu que le joint d'étanchéité annulaire soit vulcanisé sur un anneau de support en acier concentrique à celui-ci.

10. Soupape de remise à l'air (10) selon l'une des revendications précédentes, dans laquelle la soupape de remise à l'air (10) comprend un mécanisme d'arrêt qui, lorsqu'un intervalle de taille prédéterminée est atteint entre la tête de soupape (30) et la deuxième surface frontale axiale (18) du corps de soupape (12), agit entre le corps de soupape (12) et l'élément de soupape (14).

11. Pompe à vide (111), en particulier pompe à vide turbomoléculaire (111), comprenant une soupape de remise à l'air (10) selon l'une des revendications précédentes et un carter (119) dans lequel se trouve au moins un étage de pompage,
dans laquelle un orifice de remise à l'air est ménagé dans le carter (119), lequel débouche dans ledit au moins un étage de pompage et reçoit le corps de soupape (12) de la soupape de remise à l'air (10).
